# EUROPEAN PATENT APPLICATION

(11) **EP 1 357 406 A2**
(43) Date of publication of application: **29.10.2003**
(21) Application number: 03252469.6
(22) Date of filing: 17.04.2003
(51) Int. Cl.: G02B 6/16

(54) **Improved electromagnetic shielded housing waveguide arrangement**

(30) Priority: 22.04.2002 US 127249
(71) Applicant: Nortel Networks Limited, St. Laurent, Quebec H4S 2A9 (CA)
(72) Inventor: McGowan, Samuel, Newtownards, Down BT23 4BY (GB)
(74) Representative: Anderson, Angela

(57) **Abstract**

A transmitting element having an electromagnetic radiation shielding coating, the transmitting element being arranged in use to transmit a signal collected at a first end from a source located within a conductive shell through an aperture in the conductive shell and wherein in use the coating of the transmitting element is conductively connected around said aperture to a conductive surface of said shell to form a waveguide.

## Description

### FIELD OF THE INVENTION

The invention relates to an improved electromagnetic shielded housing, particularly but not exclusively to a housing for electromagnetically sensitive equipment in which the level of shielding against electromagnetic interference (EMI) provided by the housing is improved. The invention further relates to an optical waveguide having an electromagnetic radiation shielded coating.

### BACKGROUND TO THE INVENTION

As more sophisticated communication equipment is developed and transmissions speeds in communications networks increase, the likelihood of stray electromagnetic radiation causing EMI which can compromise the performance of equipment and affect certain signals. Conventional cabinets are generally not suitable for shielding EMI, in particular as the strength of stray electromagnetic radiation is increasing as equipment is deployed in higher density configurations.

Electromagnetically sensitive equipment is conventionally protected by housing the equipment in a suitably constructed conductive shell or Faraday cage type housing. This ensures the performance of the equipment is not compromised by stray high frequency electromagnetic radiation (for example such as is associated with transmission speeds of several hundred Mbits/s and above).

Any aperture through the conductive shell of the housing will compromise the shielding performance of the shell at certain frequencies as the aperture allows electromagnetic radiation above a certain cut-off frequency to penetrate the shell. For shielding of radiation below a certain cut-off frequency however, the presence of one or more apertures will not compromise the performance of the shell. Historically, transmission equipment has operated at frequencies which are effectively shielded by conventional cabinet design. However, as transmission speeds approach and exceed 1Gbit/s towards 1Terabit/s and beyond, shielding against high frequency electromagnetic interference will become increasingly important.

Conventional cabinet designs for communications equipment often incorporate a face-plate through which a visual indication means is provided to indicate the operational status of an element housed within the cabinet. This visual indication means is generated by a light source housed within the cabinet. As an example, light provided by light emitting diodes provided on the circuit boards housed within the cabinet provides a visual means assisting a human operator in locating faulty circuits within the cabinet.

A single cabinet may include hundreds of circuits, and it is extremely useful to be able to quickly locate a fault by determining if a light is no longer on, or if it is flashing etc. In particular, in housings for communications equipment, the circuit boards are often referred to as line-cards and several cards may be stacked adjacent to each other on shelves within a cabinet. The light sources are generally LEDs provide visual indications of the status of the internally housed line cards and can assist in quickly identifying which line-card is affected in the event of an alarm signal or fault occuring which is associated with a line-card.

It is therefore highly advantageous if several apertures can be provided in a cabinet's face-plate to enable a variety of light sources to indicate the operational state of equipment which is housed within the cabinet. Apertures which are used to convey a visual signal to the exterior of the cabinet can range in diameter approximately from 3mm to 5 mm or thereabouts. However, a cabinet housing very high transmission speed equipment (for example above 10 gbits/s) requires shielding for very high frequency radiation, for example, above 10 ghz. At such very high frequencies, the presence of the apertures for leds has been found to compromise the electromagnetic shielding capability of the cabinet in the case where communications equipment is housed. High levels of shielding are desirable if equipment is to conform with the requirements of a electromagnetic capability (emc) standard, for example, such as EN55022 and/or FCC part 15 j.

### OBJECT OF THE INVENTION

It is an object of the invention to overcome disadvantages associated with known methods. The above object is met by the combination of features of the main claims. The sub-claims disclose further advantageous embodiments of the invention.

An object of the invention seeks to mitigate and/or obviate the above problems by providing a conductive shell structure for housing electromagnetically sensitive equipment. The shell structure provides shielding from high frequency radiation, for example, radiation above several hundred MHz, such as 1 GHz, or even higher, for example, above 10 GHz to 1 THz despite having one or more apertures of the order of 1 to 10mm or so in diameter. This advantage is provided by coating an optical waveguide element with an electromagnetic shielding coating. The optical waveguide element is able to convey an optical signal which is transmitted through the shell structure via an aperture and the coating is conductively connected to the conductive shell around the perimeter of the aperture. This enables the coating on the optical waveguide to function as a waveguide itself. This enables the EMI shielding provided by the shell structure to be less compromised by the presence of the apertures.

Another object of the invention seeks to provide an optical waveguide having an electromagnetically shielding coating, the waveguide being arranged in use to convey an optical signal through an aperture in a conductive shell structure, the coating being provided in a form suitable for use in grounding the coating to a conductive surface of the shell structure around the aperture through which the optical waveguide conveys the optical signal.

The conductive coating, for example, a coating having a metallic composition, functions itself as a wave-guide and so prevents stray electromagnetic signals from coupling via the aperture to the equipment within the housing.

Advantageously, by improving the shielding capability of the housing of electromagnetically sensitive equipment, such equipment can be housed in higher densities than was possible before. Advantageously, the coating of the optical waveguide itself is grounded to the conductive shell which reduces the number of components required to provide a high level of EMI shielding. Advantageously, the size of the aperture required to convey the transmission of the optical signal no longer determines the cut-off frequency above which radiation can penetrate the conductive shell. Instead, the cut-off frequency determined by the structure formed by the coating of the waveguide functioning as a waveguide.

### SUMMARY OF THE INVENTION

A first aspect of the invention relates to a transmitting element having an electromagnetic radiation shielding coating, the transmitting element being arranged in use to transmit a signal collected at a first end from a source located within a conductive shell through an aperture in the conductive shell and wherein in use the coating of the transmitting element is conductively connected around said aperture to a conductive surface of said shell to form a waveguide.

Advantageously, by forming the waveguide from the coating of the transmitting element itself, the expense of providing further sheathing and/or shielding is eliminated and radiation which would otherwise be able to permeate through the aperture through which the transmitting element is passing is prevented from penetrating through the boundary of the conductive shell in either direction.

Preferably, the signal is an optical signal.

Preferably, the transmitting element is a light pipe. Advantageously, the use of a comparatively rigid transmitting element such as a light pipe enables the transmitting element to be supported solely by its connection to the conductive shell. Alternatively, in other embodiments of the invention, the transmitting element may be less rigid, and for example, may comprise an optical fibre.

Preferably, the transmitting element is open-ended at a second end.

Advantageously, this enables a visual indication to be communicated from the interior of the shell to the exterior of the shell. The indication thus conveyed may enable a person to locate a specific equipment in accordance with the type and position of visual indication provided. For example, if a light is flashing off or on, this may indicate a fault status related to the housed equipment, for example a faulty circuit on a pcb or line card. It should be noted that more than one pcb/line card may be housed together, and that each pcb/line card may have its own visual indicator or plurality of line cards/pcbs may share one or more visual indicators.

The coating may be an outer coating. This allows the application manually of a suitable coating to a pre-manufactured transmitting element. However, in alternative embodiments of the invention, the coating may be provided as part of the manufacturing process or as an extension of that process, and further coatings may be provided thereon, for example, to ensure the shielding coating is not easily damaged.

Preferably, the coating comprises a conductive coating.

More preferably, the coating comprises a metallic material.

Preferably, in use the coating of the transmitting element is contiguously conductively connected around the perimeter of said aperture.

A second aspect of the invention relates to an arrangement of at least one optically transmitting element according to the first aspect or any subsequent feature as described above, the arrangement comprising said at least one optically transmitting elements arranged in use to convey an optical signal via an aperture in a conductive shell, wherein the coating of each element each collectively functions as a waveguide to prevent electromagnetic radiation above a predetermined cut-off from penetrating into the interior of said conductive shell.

A third aspect of the invention relates to a conductive shell structure providing shielding from interfering electromagnetic radiation, the shell structure containing
at least one signal transmitting source;
at least one transmitting element arranged to collect a signal from the source at a first end and convey said signal through an aperture in said conductive shell structure, wherein the transmitting element has an electromagnetic radiation shielding coating, wherein the coating is conductively grounded to the conductive shell around said aperture to function as a wave-guide to prevent high frequency interfering electromagnetic radiation from penetrating through the shell structure.

Preferably, the conductive shell structure is a housing for electromagnetically sensitive equipment.

More preferably, the conductive shell structure is a housing for communications equipment. Other sensitive equipment may comprise medical and/or computational equipment.

The conductive shell structure may be of a scale sufficiently large to be termed "room-sized". Such shell structures may be employed where large amounts of sensitive equipment are deployed, or where human operators need to enter a housing structure. Several shell structures may be nested within each other, and the coating of any one transmitting element may be conductively connected to more than one shell structure.

Preferably, the signal source is a light emitting diode (LED).

Preferably, the signal source is provided on a printed circuit board (pcb).

Preferably, the printed circuit board comprises part of a line-card.

A fourth aspect of the invention relates to a removable panel for a housing forming a partial conductive shell structure, the conductive shell structure arranged to protect electromagnetically sensitive equipment when located in the housing, the panel arranged in use to complete the conductive shell structure, the panel having at least one aperture via which an optical signal can be conveyed by a optically transmitting element, wherein the cut-off frequency of electromagnetic radiation which is able to penetrate through the panel is determined by the configuration of a coating formed on the optical transmitting element, the coating being formed from a conductive material and conductively connected to the panel around the periphery of the aperture.

Advantageously, the invention enables the operation status of one or more line cards to be determined before accessing the interior of the housing within which each line card is located. Advantageously this enables a faulty circuit in a line card to be located to be quickly by an engineer seeking to repair or replace the circuit.

Advantageously, the invention enables visual information to be conveyed by a light transmitting element through a wall of the housing without the aperture by which the light passes compromising the interference electromagnetic radiation (EMI) shielding effect of the housing.

Advantageously, the coating on the optical fibre functions as a waveguide to prevent the EMI at high frequencies from penetrating the shielding provided by the housing. The housing may comprise a cabinet, and preferably, the cabinet is of a type suitable for housing communications equipment.

The preferred features may be combined as appropriate, as would be apparent to a skilled person, and may be combined with any of the aspects of the invention.

### BRIEF DESCRIPTION OF THE DRAWINGS

In order to show how the invention may be carried into effect, embodiments of the invention are now described below by way of example only and with reference to the accompanying figures in which:
Figure 1 shows a cabinet housing having a number operational status light indicators according to an embodiment of the invention;
Figure 2 shows how the optical transmitting member is arranged relative to the LED of the printed circuit board according to an embodiment of the invention; and
Figure 3 shows an embodiment of the invention and illustrates how the optical fibre is electrically grounded to the cabinet to ensure that radiation is not able to permeate the interior of the cabinet according to the invention.

### DETAILED DESCRIPTION OF INVENTION

The best mode of implementing the invention as currently anticipated by the inventors will now be described by way of reference to the accompanying drawings.

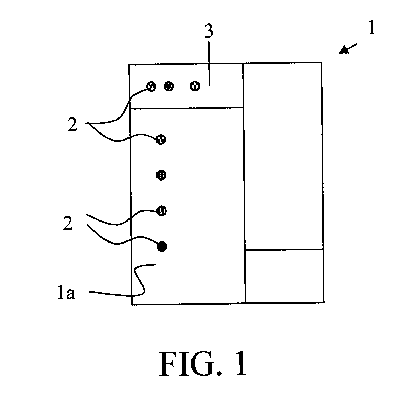

Fig. 1 shows a schematic front view of a housing 1. The housing has a form which substantially shields its interior from sources of interfering electromagnetic radiation and thus has Faraday-cage type characteristics. Such housings, may be in the form of a cabinet, or comprises the base station of a computer or similar equipment, and the invention extends to any type of housing for electro-magnetically sensitive equipment, such as high-speed communications equipment.

Housing 1 has a number of access means 3 such as removable panels or doors, arranged on a boundary wall of the housing, for example, face-plate 1a, via which access the interior of the housing 1 can be gained, for example such as access doors or panels. In order to assist technical personnel in identifying the location of equipment housed within housing 1, at least one, and preferably a plurality of apertures 2 are provided in a boundary part of the housing, generally a front part 1a or alternative a top part to enable light from an interior light source to be conveyed to the exterior of the housing 1. Such light sources usually take the form of being on, or off, or transitioning between these two states such that the light flashes. The on/off, flashing and even the speed of the flashing light can all convey information on a characteristic of the equipment provided within the housing, such as its operational state and/or the level or speed at which some function is being performed. Different colours of lights may be provided where the different lights indicate different internal conditions.

In one embodiment of the invention a suitable light source is a Light Emitting Diode (LED) which is provided on a component of said electro-magnetically sensitive equipment housed in the interior of the housing 1. Light from the LED is communicated to the exterior of the cabinet via aperture 2 to indicate the functioning and/or operational state of the component of the equipment provided within the housing; for example, if a pcb has a particular fault, a flashing light signal may be triggered, or if non-functional no light signal may be conveyed.

The invention is not limited to cabinet type housings but can be applied to any conductive shell-like structure functioning as a container for electro-magnetically sensitive equipment in which signals need to be communicated across the shell boundary, particularly where optical transmission is used to convey communications signals across the shell boundary.

Whilst it is known to use an optical fibre as an optical transmission element to convey optical signals across conductive shell-type structures by passing through apertures in the conductive shell of the containers, the cladding layers of such conventional optical fibres are selected to enhance the light conveying properties of the optical fibre core, and are not selected and/or provided in a form suitable for grounding to the surroundings of any apertures through which the optical waveguide passes. More rigid light-pipe type optical transmission elements may have no cladding layers as they have a more rigid and robust construction.

The invention relates to selection of a coating for an optical transmission element. The optical transmission element is in the embodiment depicted a rigid optical waveguide also termed a light-pipe. This allows the optical transmission element to be secured in position solely by is fixation to the housing wall in the vicinity of the aperture. However, in alternative embodiments, a more flexible optical transmission(s) elements such as optical fibre(s) can be used provided these are properly arranged to convey a light signal. The coating of the optical transmission element itself is conductively connected around the periphery of the aperture through which light is conveyed by the optical transmission element. The transmission element may pass completely through the aperture or be terminated adjacent the aperture such that light is conveyed outside the conductive shell via a free end of the transmission element.

The coating of the optical transmission element thus forms itself a waveguide preventing radiation at frequencies which could affect the performance of any equipment housed within the shell from penetrating through the aperture formed in the conductive shell. The coating of the optical transmission element is electrically grounded to the conductive shell and so eliminates the need for any further sheathing to be provided around the optical transmission element.

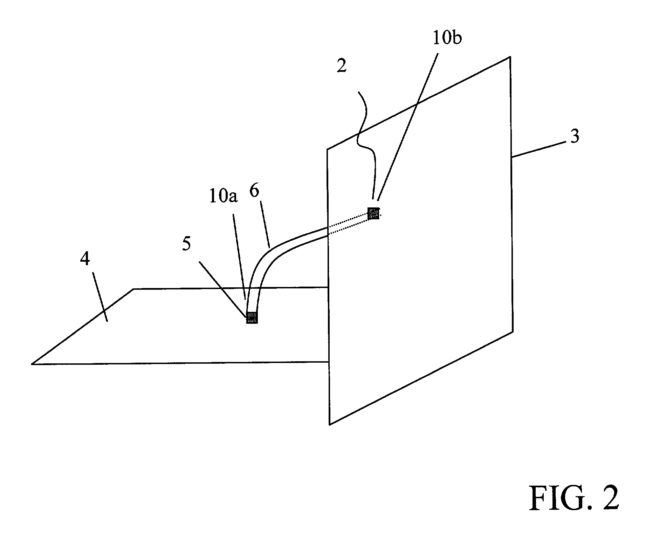

Fig. 2 shows schematically more details of such an embodiment. Here the component comprises a printed circuit board (pcb) 4 having a light source 5. Light emitted from the light source 5 is communicated into one end of an optically transmitting element 6 which conveys the light via aperture 2 to the exterior of the boundary part 3a of housing 1. In one embodiment of the invention, the optically transmitting element comprises a rigid, plastic member such as a light-pipe. The light-pipe may have a particular configuration at its light-collecting end to improve its light collecting capability, for example, a substantially concave shape. However, a plurality of optically transmitting elements may be provided in alternative embodiments and the optically transmitting element(s) may comprise less rigid light conveying means such as optical fibres as well as more rigid light conveying means such as light-pipes and/or planar optical waveguides.

The optically transmitting element 6 is provided with an electromagnetically shielding layer 7a which substantially surrounds the light conveying part 8 of the optically transmitting element 6. The shielding layer 7 comprises any suitable material, for example an electrically conductive substance. For example, in one embodiment of the invention a metallic coating may be applied. Once the optically transmitting element 6 is connected to the interior side 3a of the Faraday-type shell boundary of the housing 1 so as to conductively enclose the aperture 2, the shielding layer functions as a waveguide, preventing high frequency radiation from penetrating the interior. In an embodiment where several optically transmitting elements pass through a single aperture are employed, the coatings of the optically transmitting elements must be conductively connected to each other such that the group as a whole is conductively connected to the periphery of the aperture 2.

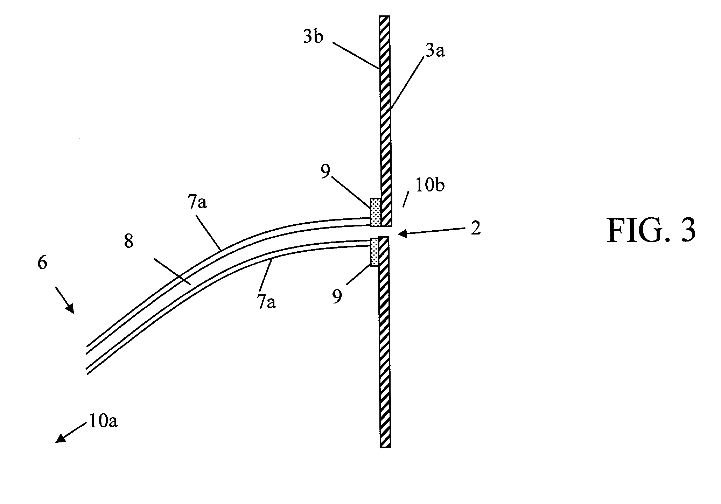

The connection of the metallic coating to the boundary of the housing 1 can be seen more clearly in Fig. 3. Fig. 3 shows connective means 9 (for example an electrically conductive substance as solder or a conductive adhesive) which conductively connects (grounds) the coating to the interior side 3a of the housing 1 to enable the coating 7a of the optically transmitting element 6 to function as a waveguide. In Fig. 3, the connective means 9 also functions to support the optically transmitting element 6 at end 10b so that it is suspended above the light source 5 at end 10a. This is advantageous as when the face-place 3 of the housing 1 is removed to access the interior of the housing, the optically transmitting element is removed as well and there are no interior connections to remove.

In alternative embodiments where a more flexible transmitting element is used, then the movement of the end of the transmitting element conductively connected to the housing must be taken into account. It is of course, possible for a socket type arrangement and a suitably conductive lubricant to be provided to enable the transmitting element to be removed from the face-plate 1a of the housing when the face-plate is removed to access the interior of the housing.

The optically transmitting element 6 may be connected to the interior light source 5, or it may be suitably supported and arranged at a distance from the light source so that it is able to capture light from the light source.

Whereas in the best mode of the invention contemplated by the inventor, the optically transmitting element 6 is open-ended at its distal end so as to allow a light source located within the conductive shell to provide a visual indication outside the conductive shell, the invention is not restricted to such uses. The reduction of parts provided by a coating applied to the optically transmitting element itself being grounded so as to function as a waveguide extends to many other scenarios where optical signals need to be conveyed across an electrically conductive surface. The electromagnetically shielding coating may be provided itself with a further protective coating, providing that the connection with the conductive surface at the periphery of the aperture is not compromised. The connection at the periphery of the aperture is preferably contiguous but need not be so if this does not compromise the shielding performance of the shell at the frequencies of interest as is apparent to those skilled in the art.

In a particularly preferred embodiment, an electromagnetically shielding housing comprising a suitable conductive shell-type arrangement contains a pcb on which a light source is located. The optically transmitting element functioning as the optical waveguide may be a substantively rigid plastic arrangement such as the lightpipe OPTOPIPE™. Such a light pipe can be held in position by any suitable adhesive means applied to a housing such that the light pipe is not attached to the pcb at any point, for example, if the coating of the light pipe is soldered to a conductive surface of the housing this can be sufficient to support the light pipe above the LED on the printed circuit board. The light emitting surface of the light pipe is optically designed to collect light from a light source, for example, any 3mm or 5mm LED and directs this light towards a viewer outside the housing. In such embodiments, the light source's emitting surface is typically around 0.5 mm from the collecting end of the light pipe. Such light pipes can be formed from a water clear transmissive polycarbonate material, for example. The electromagnetically shielding coating, for example, conductive coating, is applied to the light pipe either following manufacture of the pipe itself or subsequently by any suitable process. For example it may be applied manually, or deposited by thermal vapour deposition, or by dipping the element into a liquid coating material which then dries onto the transmission element. A polymer type coating may also be formed. By conductively connecting the coating to the container wall, the coating functions as a waveguide preventing electromagnetic interference having a frequency above a predetermined cut-off from penetrating the conductive shell of the housing.

It will also be apparent to those skilled in the art that in alternative embodiments a signal may be conveyed outside the conductive shell to a optically receiving element rather than provide a visual indication means, and that signals may be provided from one conductive shell to another conductive shell. In such embodiments, the optically transmitting element need not be restricted to optical signals but can convey any signal provided at non-optical frequencies.

The high frequency radiation which the conductive shell seeks to provide protection against may be steady or transient radiation from any source. For example, the EMI may be generated by the equipment housed within the shell or by equipment operating nearby outside the shell. Alternatively, it may be generated as a result of some external phenomena such as a high energy electromagnetic pulse arising from artificial or natural phenomena such as lightning .

The conductive coating may also be electrically grounded to the printed circuit board.

The transmission element may be unconnected at one end, for example, open-ended or open to the environment to enable an optical signal to emerge visually at the distal end from the light source. This enables a light source such as an LED located on a pcb housed within a housing having a conductive shell-type structure to provide an operational status indicator to the outside of the housing. This light signal is then visible to assists engineers in identifying an operational state associated with a particular circuit which the operation of the light source indicates. Typically, therefore, in the best-mode of the invention, a light pipe is open to the environment at its distal to enable a visual signal originating from an LED housed within the housing to be displayed outside the housing without compromising the shielding effect of the housing against EMI.

The transmission element may be fixed to the housing either permanently via a suitable adhesive means or solder or removeably via any suitable arrangement such as, for example, plug-and-socket type arrangement. A suitably conductive jointing material may be used to assist in ensuring a good conductive connection is provided.

Any range or device value given herein may be extended or altered without losing the effect sought, as will be apparent to the skilled person for an understanding of the teachings herein.

In summary, the invention provides a transmitting element having an electromagnetic radiation shielding coating, the transmitting element being arranged in use to transmit a signal collected at a first end from a source located within a conductive shell through an aperture in the conductive shell and wherein in use the coating of the transmitting element is conductively connected around said aperture to a conductive surface of said shell to form a waveguide.

## Claims

1. A transmitting element having an electromagnetic radiation shielding coating, the transmitting element being arranged in use to transmit a signal collected at a first end from a source located within a conductive shell through an aperture in the conductive shell and wherein in use the coating of the transmitting element is conductively connected around said aperture to a conductive surface of said shell to form a waveguide.

2. A transmitting element as claimed in any of claims 1-2, wherein the signal is an optical signal.

3. A transmitting element as claimed in any of claims 1-3, wherein the transmitting element is a light pipe.

4. A transmitting element as claimed in any of claims 1-4, wherein the transmitting element is an optical fibre.

5. A transmitting element as claimed in any of claims 1-5, wherein the transmitting element is not connected at a second end.

6. A transmitting element as claimed in any of claims 1-6, wherein the coating is an outer coating.

7. A transmitting element as claimed in any of claims 1-7, wherein the coating comprises a conductive coating.

8. A transmitting element as claimed in any of claims 1-8, wherein the coating includes a metallic material.

9. A transmitting element as claimed in any of claims 1-9, wherein in use the coating of the transmitting element is contiguously conductively connected around the perimeter of said aperture.

10. An arrangement of at least one optically transmitting element as claimed in claim 1, the arrangement comprising said at least one optically transmitting elements arranged in use to convey an optical signal via an aperture in a conductive shell, wherein the coating of each element each collectively functions as a waveguide to prevent electromagnetic radiation above a predetermined cut-off from penetrating into the interior of said conductive shell.

11. A conductive shell structure providing shielding from interfering electromagnetic radiation, the shell structure containing
at least one signal transmitting source;
at least one transmitting element arranged to collect a signal from the source at a first end and convey said signal through an aperture in said conductive shell structure, wherein the transmitting element has an electromagnetic radiation shielding coating, wherein the coating is conductively grounded to the conductive shell around said aperture to function as a wave-guide to prevent high frequency interfering electromagnetic radiation from penetrating through the shell structure.

12. A conductive shell structure as claimed in claim 11, wherein the conductive shell structure is a housing for electromagnetically sensitive equipment.

13. A conductive shell structure as claimed in claim 11, wherein the conductive shell structure is a housing for communications equipment.

14. A conductive shell structure as claimed in any of claims 11-13, wherein the conductive shell structure is of a scale sufficiently large to be termed "room-sized".

15. A conductive shell structure as claimed in any of claims 11-14, wherein the signal source is a light emitting diode (LED).

16. A conductive shell structure as claimed in any of claims 11-15, wherein the signal source is provided on a printed circuit board.

17. A conductive shell structure as claimed in any of claims 11-16, wherein the printed circuit board comprises part of a line-card.

18. A removable panel for a housing forming a partial conductive shell structure, the conductive shell structure arranged to protect electromagnetically sensitive equipment when located in the housing, the panel arranged in use to complete the conductive shell structure, the panel having at least one aperture via which an optical signal can be conveyed by a optically transmitting element, wherein the cut-off frequency of electromagnetic radiation which is able to penetrate through the panel is determined by the configuration of a coating formed on the optical transmitting element, the coating being formed from a conductive material and conductively connected to the panel around the periphery of the aperture.
